# EUROPEAN PATENT SPECIFICATION

(11) **EP 0 509 594 B1**
(45) Date of publication and mention of the grant of the patent: **22.10.1997**
(21) Application number: 92201020.2
(22) Date of filing: 09.04.1992
(51) Int. Cl.: G11B 20/10, G11B 20/12, G11B 15/18, G11B 27/00, H04N 9/87, H04N 9/804

(54) **System and method for improving video recorder performance in a search mode**
System und Verfahren zur Verbesserung der Suchbetriebsart bei einem Video Recorder
Système et procédé pour améliorer le fonctionnement d'un magnétoscope en mode de recherche

(30) Priority: 18.04.1991 EP 91200919
(43) Date of publication of application: 21.10.1992
(73) Proprietor: Philips Electronics N.V., 5621 BA Eindhoven (NL)
(72) Inventor: De With, Peter Hendrik Nelis, NL-5656 AA Eindhoven (NL); Nijssen, Stephanus Joseph Johannes, NL-5656 AA Eindhoven (NL)
(74) Representative: Kooiman, Josephus Johannes Antonius

(56) References cited:
- EP-A- 0 153 820
- EP-A- 0 275 026
- EP-A- 0 286 184
- EP-A- 0 407 046
- GB-A- 2 160 059
- Fernseh- und Kinotechnik 2/1984, p.41-47

## Description

### Field of the invention

The present invention applies to video recorders and, specifically, to video recorders operative with playback at the recording speed and at least one other speed.

### Background of the invention

The problem of creating adequate pictures or images from a video recording played back at the recording speed, and one or more higher speeds in a search mode has been addressed before. It is discussed in a publication entitled "Introduction to the 4 : 2 : 2 Digital Video Tape Recorder" by Stephen Gregory of the Sony Broadcasting Company, published by Pentech Press, London, 1988. Chapter 7 teaches a method of pixel-based shuffling for improving the robustness of the system and for recovering pictures in multispeed modes.
Briefly, arrays are formed of pixels whose position has been scrambled. The position of the arrays is then scrambled, first within a field and subsequently over four consecutive fields.

This is a very complicated method and yields reasonable results at high speeds, but decreases the picture quality at the lower search speeds. Further, no data compression takes place.

### Summary of the invention

It is an object of the present invention to furnish a method and system in which acceptable picture quality both at higher and lower search speeds is obtained, preferably in combination with data compression.

The present invention is a method of recording data defining a plurality of images on substantially parallel tracks of a recording medium at a recording speed, for playback at said recording speed and at least one additional speed. It comprises the steps of as set out in claim 1. A record carrier according to the invention is set out in claim 7.

The basic segments are recorded on the tracks as a plurality of subsequences each defining a first contiguous part of the image exceeding said incremental part in area. Sequentially recorded subsequences in turn define second contiguous parts of the image, greater than the first contiguous parts. All subsequences on one track together defining a third contiguous part of the image exceeding in area said second contiguous part constitute a sequence. Claim 8 defines a method for generating display signals for display of an image. Bursts of data (macro-segments) are read from a recording carrier according to the invention at a selected speed exceeding the recording speed of the data. The recording medium has a plurality of tracks each having at least part of one of a plurality of sequential images recorded thereon. Each of the bursts of data comprises data defining a contiguous area of one of the images, while a plurality of bursts varying in number in correspondence to the ratio of the selected speed to the recording speed defines all parts of an image.

The data of the read out bursts is stored in a memory until the plurality of bursts has been received, and then read from the memory in a sequence and at a rate suitable for display, thereby creating the display signals.

The present invention also constitutes an apparatus for recording video signals defining a plurality of images on a plurality of tracks of a recording medium for replay at the recording speed and at least one higher speed. Coding means are provided Claim 11 contains an apparatus for recording digital data according to the invention and claim 14 contains an apparatus for generating display signal according to the invention.

The present invention, its operation and further advantages thereof will be further clarified in the following description of preferred embodiments when taken in conjunction with the drawing, in which
Fig. la is a schematic diagram showing track pairs and head pairs in azimuth recording;
Fig. 1b is a diagram showing the variation of signal-to-noise ratio with head position in fig. la;
Fig. 2 is a diagram illustrating the head vs. track movement at a plurality of speeds exceeding the recording speed;
Fig. 3 is a diagram illustrating a problem which arises for an unacceptable ratio of playback speed to recording speed;
Fig. 4 is a schematic diagram illustrating head vs. track movement at an acceptable speed higher than the recording speed;
Fig 5a illustrates the composition of a basic segment,
Fig. 5b shows an image divided into macro-segments and basic segments;
Fig. 5c is a schematic diagram illustrating tape tracks having the segments of fig. 5b recorded thereon,
Fig. 6 illustrates macro-segment bursts recoverable at 2.5 times the recording speed according to the system and method of the present invention,
Fig. 7 illustrates the corresponding reconstructed image, and
Fig. 8 is a block diagram of the recording and playback system according to the present invention.

### Description of the preferred embodiments

The problem to be solved by the present invention is to furnish a video recorder/playback system and method which yields the best possible images for playback at the recording speed as well as at higher speeds, during, for example, a search mode. The solution to this problem in accordance with the present invention will be analysed based on a preferred embodiment in which azimuth recording is used, i.e. the information is recorded on neighbouring tracks with opposite azimuth. This is illustrated in fig. 1a where the two neighbouring tracks are denoted by a and b, respectively, and information is recorded and read from the track pairs by a head pair A, B. As is well-known, the gap in head A is so oriented that it can only read information from the a track, while head B can read information only from the b track. In the preferred embodiment it is also assumed that the width of the head is equal to the width of the track and that there are 6 tracks, i.e. 3 track pairs, per frame. The track pairs are numbered 1, 2, 3 etc. in Fig. 1a.

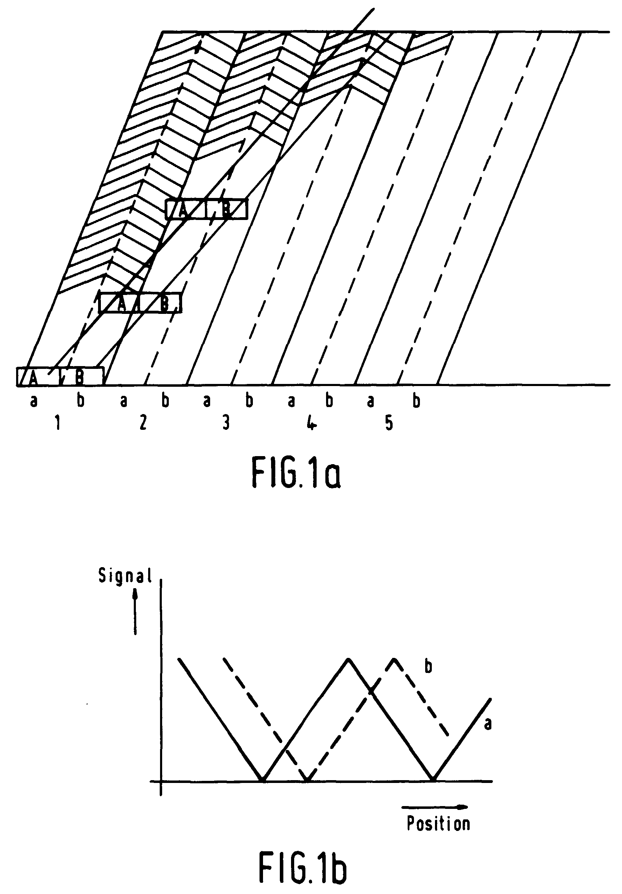

Again referring to Fig. 1a, the head pair AB will, during recording, and during playback at the recording speed, travel along the tracks so that the highest signal-to-noise ratio is always obtained. However, at a higher playback speed, the heads will not travel parallel to the tracks but will take the paths illustrated in Fig. 1a by two solid lines, one for head B and one for head A. These paths involve the crossing of tracks and, therefore, a variation of the signal-to-noise ratio furnished by the heads as a function of position. This variation is illustrated in Fig. 1b with a solid line for head A and a dashed line for head B. For any particular application, there is a minimum value of the amplitude plotted in Fig. 1b (SNR) required to detect bits with an error rate that can be handled by the error correction coding system.

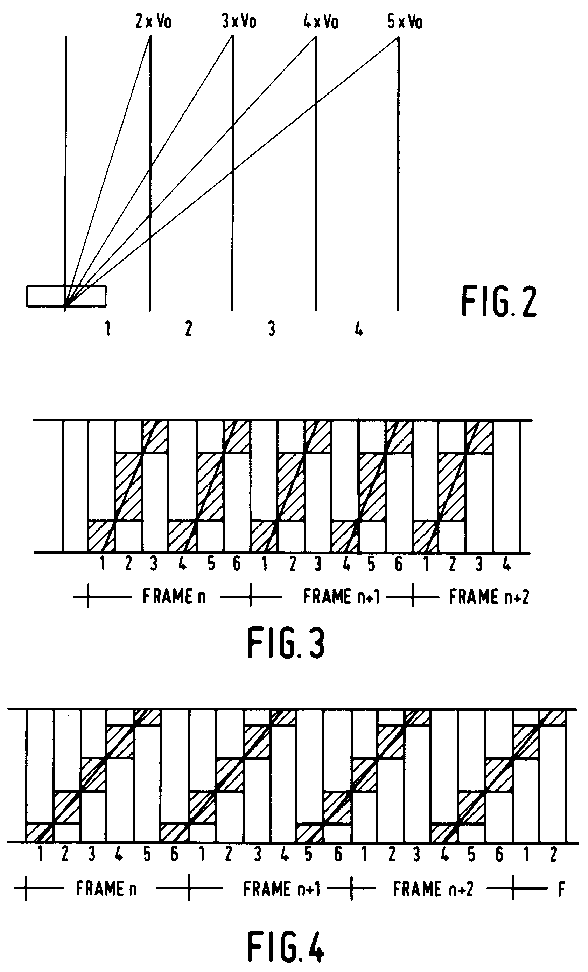

For a simplified model assuming perfect linear tracks and heads with an effective width equal to the track width, the direction of head motion as a function of the multiple of the recording speed at which playback occurs is shown in Fig. 2. Also as illustrated in Fig. 2, the head pair is preferably not in its recording or normal playback position at the start, but is located so that the centre of head A coincides with the edge of the track, i.e. in a position where the SNR is just sufficient to start data recovery. This change in relative position of head to tape takes place automatically simultaneously with selection of a search mode by the user and minimizes track crossings. With this positioning, no track crossings occur at twice the recording speed, one crossing occurs at 3 times the recording speed, etc. At a playback speed of p x v0, where p is the speed ratio and v0 the recording speed each data burst is 1/(p-1) of a tracklength long. Since only a fraction f of a data burst can be used, the usable data part when track crossing is involved is fx1/(p-1) at a playback speed which is p times the recording speed. For f=1/2 the usable data is 1/[2(p-1)].

The macro-segments derived from sequential tracks are to be stored in memory, and subsequently read out from memory for application to a video display system to recreate a whole image. As discussed above and illustrated in detail in figs. 3 and 4 for different playback speeds, only part of the information recorded on each track can be read out at such higher-than-recording (search) speeds. Therefore, even after all tracks associated with a given frame of the video signal have been scanned, some parts of the image (indicated by blank track portions in tracks 1-6 of frame n) are still missing. According to the invention, the corresponding parts of subsequently received frames, recorded on subsequent tracks, are to be used to fill in the missing parts. As is illustrated in Fig. 3, (for f = 1), this cannot be accomplished when the playback speed is three times the recording speed. Only the first part of tracks 1 and 4 is read, while the middle part of tracks 2 and 5 and the last part of tracks 3 and 6 are read for all frames. The other parts of the tracks are never scanned. The reason for this is that p is an integral (sub)multiple of the number of tracks per frame: N/p = 6/3 = 2. On the other hand, as illustrated in Fig. 4, at a playback speed which is five times the recording speed, all parts of each track will be read within five sequential frames. It is thus a requirement that any speed for quick search be such that neither N/P nor P/N is an integer.

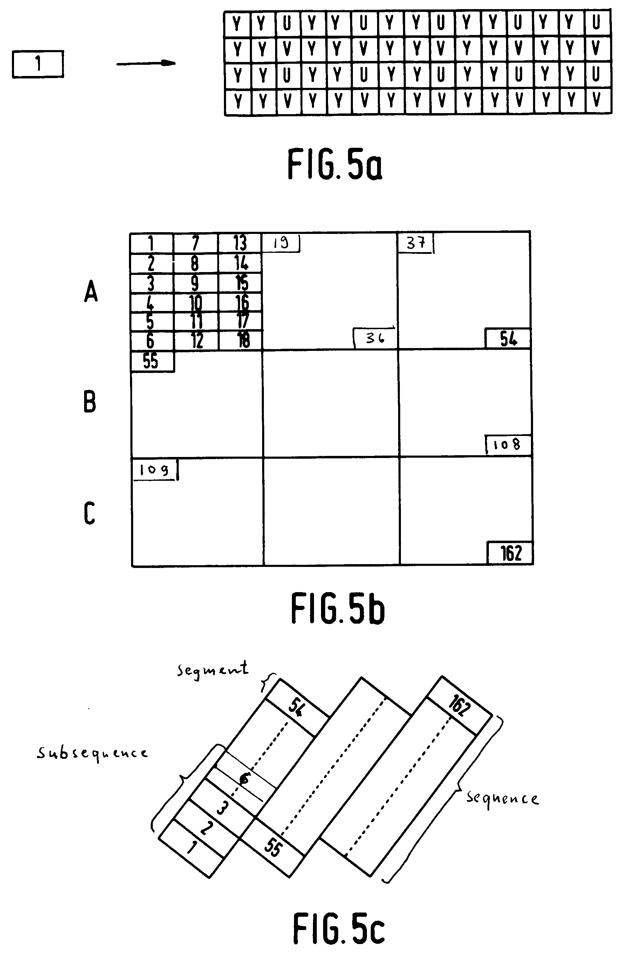

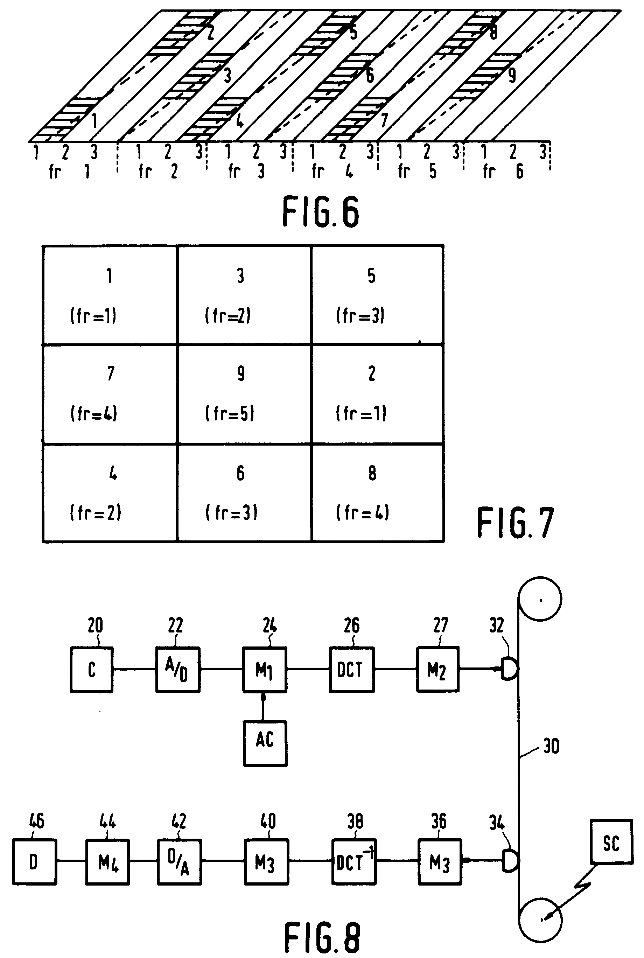

According to the invention, data is recorded on the tape in such a way that each of the above-mentioned macro-segments defines a horizontally and/or vertically contiguous part of the image, each part being as square as possible. The recording is also such that a macro-segment i.e. data defining a contiguous image portion, is read out from each track at different quick search speeds, the only difference being that the higher the quick search speeds, the smaller the amount of data within a macro-segment and, therefore, the larger the number of macro-segments per displayed frame. Readout from storage for display purposes proceeds in the normal line-by- line scanning pattern. This recording scheme will now be discussed in greater detail with reference to Figs. 5 and 6.

Referring first to Fig. 5a, this illustrates the basic segments of which the image is constructed in a preferred embodiment. Each basic segment contains sixty discrete cosine transform (DCT) encoded blocks of 8x8 pixels, all the blocks inside of the segment being adjacent blocks in the image. Each basic segment contains luminance blocks, Y, associated with 4 block lines and 10 block columns, as well as the corresponding chrominance blocks (UV). The exact structure of the basic segments with respect to the number of pixels and the type of coding is not important to the present invention. Even a single block could be used. Also, the blocks can be encoded in a variable or fixed wordlength format. The latter is used for convenience in the preferred embodiment. With variable wordlength coding, the blocklength will tend to average out: alternatively the number of bits per basic segment, or per sequence or subsequence can be fixed. A wide variety of embodiments will be readily apparent to one skilled in the art. However, a contiguous area of the image to be displayed is always represented in each basic segment.

Referring now to Fig. 5b, the illustrated rectangle represents one frame of a received video signal. The word "frame" as used herein can also include a field, since a field can be considered as a frame with lower resolution. The image represented in the frame is first divided into three horizontal sections A, B, C. Each of these sections contains fifty-four basic segments. Reference to Fig. 5c shows that the fifty-four basic segments associated with each of the horizontal sections are recorded on respective track pairs, i.e. constitute a "sequence" as defined herein. The order in which recording takes place is indicated by the numbering of the basic segments in Fig. 5b, i.e. it is carried out in a column by column basis, each column containing 6 vertically adjacent basic segments, constituting a "subsequence".

Close examination of this type of block shuffling shows that, as discussed above, it yields macro-segments of adjacent blocks at a plurality of speeds exceeding the recording speed. Also, since the length of each basic segment exceeds its height, column-by-column recording results in macro-segments which are as square as possible.

As will be shown below with reference to Figs. 6 and 7, one third of a track and, therefore, for the given embodiment, one ninth of the frame constitutes a macro-segment at playback at two and a half times the recording speed. At five and a half times the recording speed, one ninth of the track, namely columns of six vertically adjacent basic segments, constitute a macro-segment, etc. Playback speeds at which a non-integral number of basic segments per macro-segment would be required would not result in optimum picture quality. For example, at five times the recording speed, one eighth of a track or one eighth of fifty-four basic segments would constitute a macro-segment. This playback speed should preferably not be chosen even if it meets the N/p requirement specified above.

For a specific illustration of the reconstruction of the image from the macro-segments read from the tape at two and a half times the recording speed, reference is made to Figs. 6 and 7. In Fig. 6 sequential frames are indicated by "fr 1", "fr 2", etc. Above the frame notation are the track pairs associated with each frame, namely 1, 2 and 3. The track areas from which usable information is read out when the playback speed is two and a half times the recording speed are indicated by horizontal lines and are numbered in the order of read-out.

Fig. 7 shows how the data read out from the indicated track areas is put together in memory to constitute the image. Track area 1 of Fig. 6, for example, contains information corresponding to the leftmost image portion of track a of Fig. 5b and, thus, the corresponding part of the image in Fig. 7. Next, the rightmost portion of track 2 is read out, resulting in the filling in of the image portion labelled 2 in Fig. 7. No portion of the third track of frame 1 can be read out, the next available macro-segment being the middle portion of the first track of frame 2 which results in the addition of the image portion marked 3 in Fig. 7. The readout continues until the middle area of track 2 of frame 5 is read out. This completes the image by furnishing data required to reconstruct its central part. While it is true that the parts of the image are not all derived from the same frame, this will make no difference if a still picture is concerned. If there is movement from frame to frame, the errors which are created are not visually too disturbing because the probability of motion occurring within a block which has both horizontal and vertical dimensions is quite high and the visually particularly disturbing artefacts created by a constant error along a horizontal or vertical line extending all along the image are avoided.

One embodiment of apparatus required to carry out the present invention is illustrated in Fig. 8. For recording, a video camera 20 is provided. The output of video camera 20 is applied to an analog-digital converter 22. The digitized information at the output of analog-digital converter 22 is stored in a memory 24 to allow formation of the 8x8 pixel blocks by use of address control AC. The blocks are encoded by a discrete cosine transform (DCT) in a transform stage 26 as shown, e.g. in EP 0 286 184 filed 06/04/88 and published 12/10/88. Other codes could be used. In any event, data compression takes place. The addresses and amplitudes constituting the DCT blocks are again stored, (M2, which may be part of M1) to allow readout as basic segments in the order required for recording the desired subsequences illustrated in figs. 5b and 5c on a tape 30 by a recording head 32.

For display, the data on the tape is read out by a read head 34. The speed at which the readout takes place is controlled by a speed control SC. When readout is taking place at the recording speed, the data is applied to a third memory 36 in the consecutive order of basic segments indicated in Figs. 5b and 5c. If the readout is at other than the recording speed, namely at a higher search speed selected to assure that all image-bearing parts of the tape will be read, the data will be received in memory 36 as macro-segments shown in Figs. 6 and 7. The data is applied to a stage 38 to perform the inverse discrete cosine transformation. The output of stage 38 is applied, possibly via a memory 40, to digital/analog (D/A) converter 42. The output of D/A 42 is stored in a display memory 44, which is a full frame memory, the contents of which are displayed line-by-line on a display 46.

It should be noted that in above description many items such as modulators required before recording, demodulators required after readout, etc. have been omitted for the sake of clarity. Other components, such as the DCT coding stage, could be omitted or another type substituted. Memories can be combined or possibly omitted (e.g. memory 40). Basic segments may contain data from more than one frame, etc.

Thus, the present invention has been disclosed in a preferred embodiment, but other embodiments will readily occur to one skilled in the art and are intended to be encompassed in the following Claims.

## Claims

1. Method for recording digital data defining a plurality of images on substantially parallel oblique tracks of a longitudinal record carrier at a recording speed, comprising the steps of
(a) generating blocks of coded data, each block including a plurality of pixel defining a rectangular area of said image,
(b) composing a plurality of blocks to basic segments, each of said basic segments defining an incremental area of one of said images; and
(c) recording a sequence (1-54) of said basic segments on one of said tracks as a plurality of subsequences (1-6,7-12,...) each defining a first contiguous part of said image consisting of a plurality of said incremental areas lined up in a first direction, all subsequences on a track together defining a second contiguous part composed of first contiguous parts lined up in a second direction orthogonal to the first direction.

2. A method as claimed in Claim 1, wherein said recording is azimuth recording, and wherein said sequences are recorded on track pairs.

3. A method as claimed in Claim 1, wherein data defining one of said images is recorded on a plurality N of track pairs, each of said sequences having data defining 1/N of said image.

4. A method as claimed in claim 3, wherein N = 3.

5. A method as claimed in Claim 1, wherein each of said basic segments defines an area having a longer length in a first direction than in a second direction perpendicular thereto; and wherein said subsequences extend in said second direction.

6. A method as claimed in Claim 5, wherein said first direction is the horizontal direction and said second direction is the vertical direction, and
wherein said subsequences comprise columns of basic segments having data defining vertically adjacent image elements.

7. Longitudinal record carrier having a plurality of oblique tracks, digital data for creating a plurality of images being recorded on said tracks, each of said tracks having a sequence (1-54) defining a first contiguous area of one of said images recorded thereon, said sequence comprising a plurality of subsequences (1-6) each defining a second contiguous area, the second contiguous areas being lined up in a first direction, each of said subsequences comprising a plurality of basic segments each defining an incremental area of one of said images, the incremental areas being lined up in a second direction orthogonal to said first direction, each basic element consisting of blocks of coded data including a plurality of pixels defining a rectangular area of said image.

8. Method for generating display signals for display of an image in response to digital data read from a longitudinal record carrier according to claim 7, at a selected speed exceeding the recording speed, comprising the steps of:
reading out portions (1-18) of data from the tracks, representing sequentially recorded subsequences defining third contiguous parts greater than said first contiguous parts, all subsequences on a track together defining a second contiguous part
storing said portions of data in a readout memory until said recorded subsequences have been received, and
reading out image-defining data from said read-out memory in a sequence and at a rate suitable for display, thereby creating said display signals.

9. A method as claimed in Claim 9, further comprising the step of decoding said digital data before creating said display signals.

10. A method as claimed in Claim 9, wherein said selected speed is a multiple p of said recording speed, wherein each of said images is recorded on a plurality N of said tracks, and wherein p/N is not an integer.

11. Apparatus for recording digital data defining a plurality of images on substantially parallel oblique tracks of a longitudinal record carrier at a recording speed, comprising:
(a) means (24) for generating blocks of coded data, each block including a plurality of pixel defining a rectangular area of said image,
(b) means for composing a plurality of blocks to basic segments, each of said basic segments defining an incremental area of one of said images; and
(c) means (27,32) for recording a sequence (1-54) of said basic segments on one of said tracks as a plurality of subsequences (1-6,7-12,...) each defining a first contiguous part of said image consisting of a plurality of said incremental areas lined up in a first direction, all subsequences on a track together defining a second contiguous part composed of first contiguous parts lined up in a second direction orthogonal to the first direction.

12. Apparatus as claimed in claim 14, wherein each of said images is recorded on a plurality N of said tracks
and wherein a sequence of data together defining a contiguous fraction 1/N of said image is recorded on a track.

13. Apparatus as claimed in claim 12, wherein said sequence defines a rectangular image area extending over 1/N of the height of said image.

14. Apparatus for generating display signals for display of an image in response to digital data read from a longitudinal record carrier according to claim 7, at a selected speed exceeding the recording speed, comprising
reading means for reading out portions (1-18) of data from the tracks, representing sequentially recorded subsequences defining third contiguous parts greater than said first contiguous parts, all subsequences on a track together defining a second contiguous part
storing means (40) for storing said portions of data in a readout memory until said recorded subsequences have been received, and
means (44,46) for reading out image-defining data from said read-out memory in a sequence and at a rate suitable for display, thereby creating said display signals.

15. Apparatus as claimed in claim 14, wherein said selected speed is a multiple p of said recording speed, and wherein p/N is not an integer.

## Patentansprüche

1. Verfahren zum Aufzeichnen digitaler Daten, die eine Anzahl Bilder definieren, auf nahezu parallelen schrägen Spuren eines länglichen Aufzeichnungs-trägers mit einer Aufzeichnungsgeschwindigkeit, wobei dieses Verfahren die nachfolgenden Verfahrensschritte umfaßt:
(a) die Erzeugung von Blöcken codierter Daten, wobei jeder Block eine Anzahl Bildelemente aufweist, die ein rechteckiges Gebiet des genannten Bildes definieren,
(b) die Zusammensetzung einer Anzahl Blöcke zu Basissegmenten, wobei jedes der genannten Basissegmente ein zunehmendes Gebiet eines der genannten Bilder definiert; und
(c) die Aufzeichnung einer Folge (1-54) der genannten Basissegmente in einer der genannten Spuren als eine Anzahl Unterfolgen (1-6, 7-12), die je einen ersten anschließenden Teil des genannten Bildes definieren, bestehend aus einer Anzahl der genannten zunehmenden Gebiete aufgereiht in einer ersten Richtung, wobei alle Unterfolgen in einer Spur zusammen einen zweiten anschließenden Teil definieren, zusammengesetzt aus ersten anschließenden Teilen, aufgereiht in einer zweiten Richtung, senkrecht zu der ersten Richtung.

2. Verfahren nach Anspruch 1, wobei die genannte Aufzeichnung eine Azimuth-Aufzeichnung ist und wobei die genannten Folgen in Spurpaaren aufgezeichnet werden.

3. Verfahren nach Anspruch 1, wobei Daten, die eines der genannten Bilder definieren in einer Anzahl von N Spurpaaren aufgezeichnet werden, wobei jede der genannten Folgen Daten aufweisen, die 1/N des genannten Bildes definieren.

4. Verfahren nach Anspruch 3, wobei N = 3 ist.

5. Verfahren nach Anspruch 1, wobei jedes der genannten Basissegmente ein Gebiet definiert mit einer größeren Länge in einer ersten Richtung als in einer zweiten Richtung senkrecht darauf; und wobei die genannten Unterfolgen sich in der genannten zweiten Richtung erstrecken.

6. Verfahren nach Anspruch 5, wobei die genannte erste Richtung die horizontale Richtung und die genannte zweite Richtung die vertikale Richtung ist und wobei die genannten Unterfolgen Spalten von Basissegmenten aufweisen, die Daten enthalten, die vertikal angrenzende Bildelemente definieren.

7. Länglicher Aufzeichnungsträger mit einer Anzahl schräger Spuren, wobei in den genannten Spuren digitale Daten zum Erzeugen einer Anzahl Bilder aufgezeichnet werden, wobei jede der genannten Spuren eine Folge (1-54) aufweist, die ein erstes anschließendes Gebiet eines der genannten darauf aufgezeichneten Bilder definiert, wobei die genannte Folge eine Anzahl Unterfolgen (1-6) aufweist, die je ein zweites anschließendes Gebiet definieren, wobei die zweiten anschließenden Gebiete in einer ersten Richtung aufgereiht sind, wobei jede der genannten Unterfolgen eine Anzahl Basissegmente aufweist, die je ein zunehmendes Gebiet eines der genannten Bilder definieren, wobei die zunehmenden Gebiete in einer zweiten Richtung senkrecht zu der genannten ersten Richtung aufgereiht sind, wobei jedes Basiselement aus Blöcken codierter Daten besteht, die eine Anzahl Bildelemente aufweist, die ein rechteckiges Gebiet des genannten Bildes definieren.

8. Verfahren zum Erzeugen von Wiedergabesignalen zur Wiedergabe eines Bildes in Antwort auf digitale Daten, die aus einem länglichen Aufzeichnungsträger nach Anspruch 7 ausgelesen wurden, und zwar mit einer selektierten Geschwindigkeit, die größer ist als die Aufzeichnungsgeschwindigkeit, wobei dieses Verfahren die nachfolgenden Verfahrensschritte aufweist:
das Auslesen von Teilen (1-8) von Daten aus den Spuren, die sequentiell aufgezeichnete Unterfolgen darstellen, die dritte anschließende Teile definieren, die gröber sind als die genannten ersten anschließenden Teile, wobei alle Unterfolgen in einer Spur zusammen einen zweiten anschließenden Teil definieren,
das Speichern der genannten Teile von Daten in einem Auslesespeicher bis die genannten aufgezeichneten Unterfolgen empfangen worden sind, und
das Auslesen der bild-definierenden Daten aus dem genannten Auslesespeicher in einer Folge und mit einer Rate, die für widergabe geeignet ist, wodurch die genannten Wiedergabesignale erzeugt werden.

9. Verfahren nach Anspruch 9, weiterhin mit dem Verfahrensschritt der Decodierung der genannten digitalen Daten vor der Erzeugung der genannten Wiedergabesignale.

10. Verfahren nach Anspruch 9, wobei die genannte selektierte Geschwindigkeit ein Vielfaches p der genannten Aufzeichnungsgschwindigkeit ist, wobei jedes der genannten Bilder in einer Anzahl N der genannten Spuren aufgezeichnet ist und wobei p/N nicht eine ganze Zahl ist.

11. Gerät zum Aufzeichnen digitaler Daten, die eine Anzahl Bilder in nahezu parallelen schrägen Spuren eines länglichen Aufzeichnungsträgers definieren, mit einer Aufzeichnungsgeschwindigkeit, mit:
(a) Mitteln (24) zum Erzeugen von Blöcken codierter Daten, wobei jeder Block eine Anzahl Bildelemente aufweist, die ein rechteckiges Gebiet des genannten Bildes definieren,
(b) Mitteln zum Zusammensetzen einer Anzahl Blöcke zu Basissegmenten, wobei jedes Basissegment ein zunehmendes Gebiet einer der genannten Bilder definiert; und
(c) Mitteln (27, 32) zum Aufzeichnen einer Folge (1-54) der genannten Basissegmente in einer der genannten Spuren als eine Anzahl Untersolgen (1-6, 7-12, ...), die je einen ersten anschließenden Teil des genannten Bildes definieren, bestehend aus einer Anzahl der genannten zunehmenden Gebiete, aufgereiht in einer ersten Richtung, wobei alle Unterfolgen in einer Spur zusammen einen zweiten anschlienden Teil definieren, zusammengesetzt aus ersten anschließenden Teilen, aufgereiht in einer zweiten Richtung, senkrecht zu der ersten Richtung.

12. Gerät nach Anspruch 14, wobei jedes der genannten Bilder in einer Anzahl N der genannten Spuren aufgezeichnet ist und wobei eine Folge von Daten zusammen einen anschließenden Bruchteil 1/N des genannten Bildes in einer Spur aufgezeichnet wird.

13. Gerät nach Anspruch 12, wobei die genannte Folge ein rechteckiges Bildgebiet definiert, das sich über 1/N der Höhe des genannten Bildes erstreckt.

14. Gerät zum Erzeugen von Bildsignalen zur Wiedergabe eines Bildes in Antwort auf digitale Daten, ausgelesen aus einem länglichen Aufzeichnungsträger nach Anspruch 7, mit einer selektierten Geschwindigkeit, die größer ist als die Aufzeichnungsgeschwindigkeit, mit
Auslesemitteln zum Auslesen von Teilen (1-18) von Daten aus den Spuren, die sequentiell aufgezeichnete Unterfolgen darstellen, die dritte anschließende Teile darstellen, die gröber sind als die ersten anschließenden Teile, wobei alle Unterfolgen in einer Spur zusammen einen zweiten anschließenden Teil definieren,
Speichermitteln (40) zum Speichern der genanten Teile von Daten in einem Auslesespeicher, bis die genannten aufgezeichneten Unterfolgen empfangen worden sind, und
Mitteln (44, 46) zum Auslesen der bild-definierenden Daten aus dem genannten Auslesespeicher in einer Folge und mit einer geschwindigkeit, die geeignet ist für Wiedergabe, wodurch die genannten Wiedergabesignale erzeugt werden.

15. Gerät nach Anspruch 14, wobei die genannte selektierte Geschwindigkeit ein Vielfachses p der genannten Aufzeichnungsgeschwindigkeit ist und wobei p/N nicht eine ganze Zahl ist.

## Revendications

1. Procédé d'enregistrement de données numériques définissant une pluralité d'images sur des pistes obliques sensiblement parallèles d'un support d'enregistrement longitudinal à une vitesse d'enregistrement, comprenant les étapes consistant à :
(a) générer des blocs de données codées, chaque bloc comprenant une pluralité de pixels définissant une zone rectangulaire de ladite image,
(b) composer une pluralité de blocs en segments de base, chacun desdits segments de base définissant une zone incrémentale d'une desdites images, et
(c) enregistrer une séquence (1-54) desdits segments de base sur une desdites pistes sous la forme d'une pluralité de sous-séquences (1-6, 7-12, ...) définissant chacune une première partie contigue de ladite image consistant en une pluralité desdites zones incrémentales alignées dans une première direction, toutes les sous-séquences sur une piste définissant ensemble une deuxième partie contiguë composée de première parties contiguës alignées dans une deuxième direction orthogonale à la première direction.

2. Procédé suivant la revendication 1, dans lequel ledit enregistrement est un enregistrement en azimut, et dans lequel lesdites séquences sont enregistrées sur des paires de pistes.

3. Procédé suivant la revendication 1, dans lequel les données définissant une desdites images sont enregistrées sur une pluralité N de paires de pistes, chacune desdites séquences comprenant les données définissant 1/N de ladite image.

4. Procédé suivant la revendication 3, dans lequel N = 3.

5. Procédé suivant la revendication 1, dans lequel chacun desdits segments de base définit une zone dont la longueur est plus grande dans une première direction que dans une deuxième direction perpendiculaire à la première direction; et dans lequel lesdites sous-séquences s'étendent dans ladite deuxième direction.

6. Procédé suivant la revendication 5, dans lequel ladite première direction est la direction horizontale et ladite deuxième direction est la direction verticale, et dans lequel lesdites sous-séquences comprennent des colonnes de segments de base comprenant des données définissant des éléments d'image adjacents dans le sens vertical.

7. Support d'enregistrement longitudinal comprenant une pluralité de pistes obliques, des données numériques pour créer une pluralité d'images étant enregistrées sur lesdites pistes, chacune desdites pistes comprenant une séquence (1-54) définissant une première zone contigue d'une desdites images enregistrées sur ce support, ladite séquence comprenant une pluralité de sous-séquences (1-6) définissant chacune une deuxième zone contigue, les deuxièmes zones contiguës étant alignées dans une première direction, chacune desdites sous-séquences comprenant une pluralité de segments de base définissant chacun une zone incrémentale d'une desdites images, les zones incrémentales étant alignées dans une deuxième direction orthogonale à ladite première direction, chaque élément de base consistant en des blocs de données codées comprenant une pluralité de pixels définissant une zone rectangulaire de ladite image.

8. Procédé de génération de signaux d'affichage pour afficher une image en réaction aux données numériques lues sur un support d'enregistrement longitudinal suivant la revendication 7, à une vitesse sélectionnée supérieure à la vitesse d'enregistrement, comprenant les étapes consistant à :
extraire par lecture des parties (1-18) de données des pistes, représentant des sous-séquences enregistrées de manière séquentielle, définissant des troisièmes parties contiguës plus grandes que lesdites premières parties contiguës, toutes les sous-séquences sur une piste définissant ensemble une deuxième partie contigue;
stocker lesdites parties de données dans une mémoire de lecture jusqu'à ce que lesdites sous-séquences enregistrées aient été reçues, et
extraire par lecture les données définissant l'image de ladite mémoire de lecture en une séquence et à une vitesse appropriée pour l'affichage, créant de la sorte lesdits signaux d'affichage.

9. Procédé suivant la revendication 8, comprenant en outre l'étape consistant à décoder lesdites données numériques avant de créer lesdits signaux d'affichage.

10. Procédé suivant la revendication 9, dans lequel ladite vitesse sélectionnée est un multiple p de ladite vitesse d'enregistrement, dans lequel chacune desdites images est enregistrée sur une pluralité N desdites pistes, et dans lequel p/N n'est pas un entier.

11. Appareil d'enregistrement de données numériques définissant une pluralité d'images sur des pistes obliques sensiblement parallèles d'un support d'enregistrement longitudinal à une vitesse d'enregistrement comprenant :
(a) un moyen (24) pour générer des blocs de données codées, chaque bloc comprenant une pluralité de pixels définissant une zone rectangulaire de ladite image,
(b) un moyen pour composer une pluralité de blocs en segments de base, chacun desdits segments de base définissant une zone incrémentale d'une desdites images, et
(c) des moyens (27, 32) pour enregistrer une séquence (1-54) desdits segments de base sur une desdites pistes sous la forme d'une pluralité de sous-séquences (1-6, 7-12, ...) définissant chacune une première partie contiguë de ladite image consistant en une pluralité desdites zones incrémentales alignées dans une première direction, toutes les sous-séquences sur une piste définissant ensemble une deuxième partie contiguë composée de premières parties contiguës alignées dans une deuxième direction orthogonale à la première direction.

12. Appareil suivant la revendication 14, dans lequel chacune desdites images est enregistrée sur une pluralité N desdites pistes
et dans lequel une séquence de données définissant ensemble une fraction contiguë 1/N de ladite image est enregistrée sur une piste.

13. Appareil suivant la revendication 12, dans lequel ladite séquence définit une zone d'image rectangulaire s'étendant sur 1/N de la hauteur de ladite image.

14. Appareil de génération de signaux d'affichage pour l'affichage d'une image en réaction à des données numériques lues sur un support d'enregistrement longitudinal conforme à la revendication 7, à une vitesse sélectionnée dépassant la vitesse d'enregistrement, comprenant des moyens de lecture pour extraire par lecture des parties (1-18) de données des pistes, représentant des sous-séquences enregistrées de manière séquentielle, définissant des troisièmes parties contiguës plus grandes que lesdites premières parties contiguës, toutes les sous-séquences sur une piste définissant ensemble une deuxième partie contiguë;
des moyens de stockage (40) pour stocker lesdites parties de données dans une mémoire de lecture jusqu'à ce que lesdites sous-séquences enregistrées aient été reçues, et
des moyens (44,46) pour extraire par lecture les données définissant l'image de ladite mémoire de lecture en une séquence et à une vitesse appropriée pour l'affichage, créant de la sorte lesdits signaux d'affichage.

15. Appareil suivant la revendication 14, dans lequel ladite vitesse sélectionnée est un multiple p de ladite vitesse d'enregistrement, et dans lequel p/N n'est pas un entier.
